# EUROPÄISCHE PATENTSCHRIFT

(11) **EP 4 327 417 B1**
(45) Veröffentlichungstag und Bekanntmachung des Hinweises auf die Patenterteilung: **17.09.2025**
(21) Anmeldenummer: 21752047.7
(22) Anmeldetag: 29.07.2021
(51) Int. Cl.: H01R 43/02, H01R 4/02

(54) **ULTRASCHALLSCHWEISSVERFAHREN UND ULTRASCHALLSCHWEISSTEIL**
ULTRASONIC WELDING METHOD AND ULTRASONIC WELDING PART
PROCÉDÉ DE SOUDAGE PAR ULTRASONS ET PIÈCE DE SOUDAGE PAR ULTRASONS

(43) Veröffentlichungstag der Anmeldung: 28.02.2024
(73) Patentinhaber: Schunk Sonosystems GmbH, 35435 Wettenberg (DE)
(72) Erfinder: STROBEL, Heiko, 35516 Münzenberg (DE); RÜHL, Sebastian, 35083 Wetter (DE); FEY, Manuel, 35585 Blasbach (DE); WAGENBACH, Udo, 38418 Buseck (DE)
(74) Vertreter: Qip Patent & Recht Dr. Kuehn & Partner mbB
(86) Internationale Anmeldenummer: PCT/EP2021/071333
(87) Internationale Veröffentlichungsnummer: WO 2023/006210

(56) Entgegenhaltungen:
- EP-A1- 3 474 391
- WO-A1-2020/085038
- DE-T5- 112019 002 641
- FR-A1- 2 906 087
- US-A1- 2011 198 122

## Beschreibung

### GEBIET DER ERFINDUNG

Die vorliegende Erfindung betrifft ein Ultraschallschweißverfahren zum Verschweißen eines elektrisch leitfähigen Kontaktelements mit mindestens zwei Leitungen aus unterschiedlichen elektrisch leitfähigen Materialien. Darüber hinaus betrifft die Erfindung ein Ultraschallschweißteil, das in einem solchen Verfahren hergestellt worden sein kann.

### HINTERGRUND DER ERFINDUNG

Für verschiedene Anwendungen kann es notwendig oder hilfreich sein, eine oder mehrere Leitungen mit einem Kontaktelement zu verschweißen. Das Kontaktelement kann beispielsweise ein Teil eines Terminals oder eines Steckers sein.

Ein elektrisch leitfähiges Kontaktelement kann in einem Ultraschallschweißverfahren sortenrein mit mehreren Leitungen aus dem gleichen elektrisch leitfähigen Material verschweißt werden.

DE 10 2005 048368 B3 beschreibt ein Ultraschallschweißverfahren, bei dem ein elektrisch leitfähiger Träger nacheinander mit mehreren Litzen verschweißt wird. Beispielsweise kann in einem ersten Schritt eine erste Litze auf den Träger geschweißt werden und in einem zweiten Schritt eine zweite Litze direkt auf die auf den Träger geschweißte erste Litze geschweißt werden. Der Träger befindet sich dabei zwischen der ersten Litze und einer Sonotrode, die die erforderliche Schweißenergie in Form von Ultraschallschwingungen erzeugt, d. h., die Schweißenergie wird über den Träger in die jeweilige Litze eingebracht.

EP 1771274 B1 beschreibt ein Ultraschallschweißverfahren, bei dem im Unterschied zum Verfahren in DE 10 2005 048368 B3 eine einzelne Litze oder ein verdichtetes oder verschweißtes Litzengebilde mit dem Träger verschweißt wird, wobei sich die Litze bzw. das Litzengebilde zwischen der Sonotrode und dem Träger befindet, d. h., die Schweißenergie wird über die Litze bzw. das Litzengebilde in den Träger eingebracht.

EP 3022007 B1 beschreibt ein Ultraschallschweißverfahren, bei dem ein Knoten aus mindestens zwei Litzen aus unterschiedlichen Materialien geschweißt wird, indem mindestens eine erste Litze aus einem ersten Material, beispielsweise Kupfer oder einer Kupferlegierung, zu einem ersten Teilknoten verdichtet wird und auf den ersten Teilknoten mindestens eine zweite Litze aus einem zweiten Material, beispielsweise Aluminium oder einer Aluminiumlegierung, gelegt und mit dem ersten Teilknoten zu einem Gesamtknoten verschweißt wird. Der erste Teilknoten befindet sich dabei zwischen der zweiten Litze und der Sonotrode, d. h., die Schweißenergie wird über den ersten Teilknoten in die zweite Litze eingebracht.

US 2011/198122 A1 beschreibt einen elektrischen Draht mit einem Anschluss, der einen Leiter enthält, wobei der Anschluss mit einem Endabschnitt des Leiters verbunden ist. Die Klemme umfasst einen ersten Anschlussabschnitt, der mit einem elektrischen Gerät verbunden ist, und einen zweiten Anschlussabschnitt, der mit dem Leiter verbunden ist. Der zweite Anschlussabschnitt umfasst eine erste Anschlussfläche und eine zweite Anschlussfläche, die der ersten Anschlussfläche gegenüberliegt. Der Leiter umfasst einen ersten Leiter und einen zweiten Leiter, die mit der ersten Anschlussfläche bzw. der zweiten Anschlussfläche durch Ultraschallverschweißung verbunden sind. Die Gesamtquerschnittsfläche des ersten Leiters und des zweiten Leiters beträgt nicht weniger als 20 mm².

EP 3 474 391 A1 beschreibt ein Verfahren zum Verbinden mindestens zweier mehrdrahtiger Litzen mittels Ultraschalls, enthaltend die Schritte: a) Auffächern mindestens einer der Litzen, bevorzugt sämtlicher Litzen, in einer Auffächerungsebene; b) vor, während und/oder nach Schritt a): Einlegen der Litzen in einen Verdichtungsraum einer Ultraschallverbindungsvorrichtung, so dass mindestens zwei der Litzen im Wesentlichen entlang der Auffächerungsebene in Kontakt miteinander sind; c) Verbinden, insbesondere Verschweißen und/oder Verlöten, der aufgefächerten Litzen mittels Ultraschalls.

DE 11 2019 002641 T5 beschreibt eine Drahtverbindungsstruktur und ein Drahtverbindungsverfahren.

WO 2020/085038 A1 beschreibt eine elektrische Drahtverbindungsstruktur und ein elektrisches Drahtverbindungsverfahren.

### ZUSAMMENFASSUNG DER ERFINDUNG UND VORTEILHAFTER AUSFÜHRUNGSFORMEN

Es kann ein Bedarf an einem Ultraschallschweißverfahren bestehen, mit dem eine ausreichend feste elektrisch leitfähige Verbindung zwischen einem elektrisch leitfähigen Kontaktelement und mindestens zwei Leitungen aus unterschiedlichen elektrisch leitfähigen Materialien hergestellt werden kann, beispielsweise aus Gewichts- oder Kostengründen. Darüber hinaus kann ein Bedarf an einem entsprechenden Ultraschallschweißteil bestehen.

Einem solchen Bedarf kann mit dem Gegenstand der unabhängigen Ansprüche entsprochen werden. Vorteilhafte Ausführungsformen sind in den abhängigen Ansprüchen, der nachfolgenden Beschreibung und den beigefügten Figuren dargelegt.

Ein erster Aspekt der Erfindung betrifft ein Ultraschallschweißverfahren zum Verschweißen eines elektrisch leitfähigen Kontaktelements mit mindestens zwei Leitungen aus unterschiedlichen elektrisch leitfähigen Materialien. Das Ultraschallschweißverfahren umfasst zumindest die folgenden Schritte, die in der nachstehend angegebenen Reihenfolge oder einer anderen Reihenfolge ausgeführt werden können: (i) Anordnen des Kontaktelements und eines ersten Leitungsabschnitts einer ersten Leitung zwischen einem Amboss und einer Sonotrode; (ii) Verschweißen des Kontaktelements und des ersten Leitungsabschnitts, wobei der Amboss und die Sonotrode relativ zueinander in einander entgegengesetzten Richtungen bewegt werden, um das Kontaktelement und den ersten Leitungsabschnitt gegeneinanderzudrücken, und wobei die Sonotrode in Ultraschallschwingungen versetzt wird; (iii) Anordnen des mit dem ersten Leitungsabschnitt verschweißten Kontaktelements und eines zweiten Leitungsabschnitts einer zweiten Leitung, deren elektrisch leitfähiges Material von einem elektrisch leitfähigen Material der ersten Leitung abweicht, zwischen dem Amboss und der Sonotrode, sodass der zweite Leitungsabschnitt zwischen dem mit dem Kontaktelement verschweißten ersten Leitungsabschnitt und der Sonotrode liegt; und (iv) Verschweißen des mit dem Kontaktelement verschweißten ersten Leitungsabschnitts und des zweiten Leitungsabschnitts, wobei der Amboss und die Sonotrode relativ zueinander in die einander entgegengesetzten Richtungen bewegt werden, um den mit dem Kontaktelement verschweißten ersten Leitungsabschnitt und den zweiten Leitungsabschnitt gegeneinanderzudrücken, und wobei die Sonotrode in Ultraschallschwingungen versetzt wird.

Unter "Kontaktelement" kann allgemein ein im Vergleich zur ersten und zweiten Leitung deutlich steiferes Metallstück verstanden werden, beispielsweise in Form eines Plättchens oder einer Scheibe. Das Kontaktelement kann flach ausgeführt sein, aber auch an einer oder mehreren Stellen gebogen sein. Das Kontaktelement kann beispielsweise auch einen ösen- oder u-förmigen Abschnitt umfassen.

Unter "Leitung" kann beispielsweise ein Einzeldraht, eine Ader, eine Litze, d. h. ein Verbund aus mehreren Einzeldrähten, ein massiver Leiter, etwa in Form einer Busbar und/oder mit rechteckförmigem Querschnitt, oder eine Kombination aus mindestens zwei der vorgenannten Beispiele verstanden werden. Eine solche Leitung kann zum Beispiel abschnittsweise von einem elektrisch isolierenden Außenmantel umgeben sein. Unter "Leitungsabschnitt" kann ein freiliegender Endabschnitt der jeweiligen Leitung oder ein zwischen zwei Enden der jeweiligen Leitung befindlicher freiliegender Zwischenabschnitt verstanden werden. Handelt es sich bei der jeweiligen Leitung um ein Bündel aus mehreren Metalldrähten oder um eine Kombination aus mindestens zwei solcher Bündel, so können die Metalldrähte im entsprechenden Leitungsabschnitt lose sein oder durch vorheriges Verdichten oder Verschweißen kompaktiert worden sein.

Beispielsweise kann das Kontaktelement auf eine Ambossfläche des Ambosses gelegt werden. Der erste Leitungsabschnitt kann dann auf eine der Ambossfläche abgewandte Oberfläche des Kontaktelements gelegt werden.

Um die jeweiligen Fügepartner gegeneinanderzudrücken und miteinander zu verschweißen, kann die Sonotrode beispielsweise von oben auf den Amboss zubewegt und anschließend in entgegengesetzter Richtung wieder vom Amboss wegbewegt werden. Auf diese Weise können Anhaftungen des jeweils oben liegenden Fügepartners an der Sonotrode vermieden werden.

Zum Verschweißen des ersten Leitungsabschnitts können je nach Bedarf andere Schweißparameter als zum Verschweißen des zweiten Leitungsabschnitts verwendet werden. Dabei können die Schweißparameter abhängig vom jeweiligen Material und/oder vom jeweiligen Querschnitt der Leitungsabschnitte gewählt werden. Die Schweißparameter können unter anderem beispielsweise eine Amplitude der Ultraschallschwingungen, eine Schweißenergie, eine Schweißzeit oder einen Druck, mit dem die Fügepartner zusammengedrückt werden sollen, umfassen (siehe auch weiter unten). Unter "Ultraschallschwingungen" können Schwingungen mit Frequenzen im Ultraschallbereich von 16 kHz bis 1 GHz, vorzugsweise von 16 kHz bis 100 kHz, verstanden werden.

Beispielsweise kann Schritt (i) des Ultraschallschweißverfahrens umfassen: (a) Einlegen des Kontaktelements auf den Amboss in einen geöffneten Schweißraum; (b) Schließen des Schweißraums, wobei das Kontaktelement mithilfe von Seitenschiebern fixiert wird; (c) Auflegen der ersten Leitung auf das Kontaktelement. Anschließend kann Schritt (ii) ausgeführt werden. Schritt (iii) kann beispielsweise umfassen: Auflegen der zweiten Leitung auf das mit der ersten Leitung verschweißte Kontaktelement. Anschließend kann Schritt (iv) ausgeführt werden.

Die einzelnen Schritte können unmittelbar oder in einem gewissen zeitlichen Abstand aufeinanderfolgen. Beispielsweise kann nach Schritt (ii) einige Zeit gewartet werden, bevor Schritt (iii) ausgeführt wird. Prinzipiell können Schritt (iii) und Schritt (iv) auch von einer anderen Ultraschallschweißvorrichtung ausgeführt werden als Schritt (i) und Schritt (ii). Ferner kann das Kontaktelement nach Schritt (iv) in entsprechender Weise mit mindestens einer weiteren ersten Leitung aus dem gleichen Material wie die erste Leitung und/oder mit mindestens einer weiteren zweiten Leitung aus dem gleichen Material wie die zweite Leitung verschweißt werden. Denkbar ist auch ein zusätzlicher Schritt, in dem das Kontaktelement nach Schritt (iv) in entsprechender Weise mit einer dritten Leitung aus einem anderen elektrisch leitfähigen Material als die erste und zweite Leitung verschweißt wird.

Es ist möglich, dass das Kontaktelement vor Schritt (i) in mindestens einem früheren Schritt mit einem weiteren Leitungsabschnitt mindestens einer weiteren Leitung aus dem gleichen elektrisch leitfähigen Material wie die erste Leitung verschweißt worden ist. Dementsprechend können in Schritt (i) das mit dem weiteren Leitungsabschnitt verschweißte Kontaktelement und der erste Leitungsabschnitt zwischen dem Amboss und der Sonotrode angeordnet werden. In Schritt (ii) können dann der mit dem Kontaktelement verschweißte weitere Leitungsabschnitt und der erste Leitungsabschnitt miteinander verschweißt werden. Anders ausgedrückt ist Schritt (ii) nicht zwangsläufig als der erste Schweißschritt des Verfahrens aufzufassen. Vielmehr kann es sich dabei auch um einen zweiten, dritten oder noch späteren Schweißschritt des Verfahrens handeln.

Bislang herrschte die allgemeine Auffassung, dass ausreichend mechanisch feste Schweißverbindungen zwischen einem Kontaktelement und mehreren Leitungen nur dadurch erzeugt werden könnten, dass die Leitungen sortenrein verschweißt würden, d. h., die Leitungen wie auch das Kontaktelement sollten möglichst aus dem gleichen Material sein. Es wurde daher in der Vergangenheit gar nicht erst in Betracht gezogen, Leitungen nicht sortenrein mit Kontaktelementen zu verschweißen.

Gleichzeitig besteht aus Gründen der Gewichts- und Kostenreduktion seit Längerem das Bedürfnis, Kupferleitungen in Kombination mit Aluminiumleitungen zu verarbeiten, beispielsweise im Rahmen der Herstellung von Kabelbäumen für moderne Kraftfahrzeuge.

Das vor- und nachstehend beschriebene Ultraschallschweißverfahren ermöglicht es nun, ein Kontaktelement mit mehreren verschiedenartigen Leitungen, beispielsweise Kupfer- und Aluminiumlitzen, in effizienter Weise ohne nennenswerte Beeinträchtigung der mechanischen Festigkeit gegenüber bestehenden Schweißverfahren zu verbinden. Mit dem Verfahren, wie es vor- und nachstehend beschrieben wird, konnte also nicht nur ein technisches Vorurteil überwunden, sondern darüber hinaus ein seit Längerem bestehendes Bedürfnis befriedigt werden.

Zugversuche haben gezeigt, dass mithilfe des vor- und nachstehend beschriebenen Ultraschallschweißverfahrens eine sehr belastbare Schweißverbindung zwischen einem Kupferplättchen als Kontaktelement, einer Kupferlitze und einer Aluminiumlitze geschaffen werden kann. Im Schnitt widerstand die derart erzeugte Schweißverbindung einer Zugkraft von rund 3000 N, die in diesen Versuchen beispielhaft als Maß für die mechanische Festigkeit der Schweißverbindung diente. In bestimmten Konstellationen konnte die Zugkraft sogar auf deutlich mehr als 4000 N erhöht werden. Überraschenderweise wurde festgestellt, dass es beim Verschweißen der Aluminiumlitze zu keinerlei Aluminiumanhaftungen an der Sonotrode oder sonstigen Schweißwerkzeugen kam, unabhängig davon, ob das Kontaktelement zunächst mit der Kupferlitze und anschließend mit der Aluminiumlitze oder zunächst mit der Aluminiumlitze und anschließend mit der Kupferlitze verschweißt wurde. Das Ultraschallschweißverfahren ermöglicht somit nicht nur eine gute Prozesskontrolle und eine hohe Fertigungsgenauigkeit, sondern wirkt sich darüber hinaus sehr positiv auf die Fertigungsgeschwindigkeit aus.

Dadurch, dass das Verschweißen in mehreren zeitlich aufeinanderfolgenden Schritten erfolgt, kann sichergestellt werden, dass die Querschnitte der miteinander bzw. mit dem Kontaktelement verschweißten Leitungen deutlich voneinander abgegrenzt sind. Beispielsweise können die Querschnitte jeweils eine rechteckähnliche Kontur aufweisen, ohne dass einzelne Metalldrähte der einen Leitung im Querschnitt der jeweils anderen Leitung liegen. Auf diese Weise können unerwünschte Schwankungen der Festigkeit, des Press- und Schweißmaßes und der Schweißzeit vermieden werden.

Als besonders günstig erwies sich eine Variante, bei der das Kontaktelement zunächst mit der Kupferlitze und anschließend mit der Aluminiumlitze verschweißt wird. Dabei konnte eine besonders hohe mechanische Festigkeit der Schweißverbindung zwischen dem Kontaktelement und den beiden Litzen festgestellt werden. Auch konnten keinerlei Beschädigungen der Litzen, wie etwa durchtrennte Metalldrähte oder übermäßige Grate, beobachtet werden. Dies lag vermutlich daran, dass durch das Aufschweißen der Kupferlitze mit entsprechend hohen Schweißparametern eine ausreichend kompaktierte Grundlage für den nächsten Schweißvorgang geschaffen werden konnte. Eine derartige Schweißverbindung kann also ähnliche gute Schweißeigenschaften wie ein kompaktes, einstückig hergestelltes Bauteil aufweisen.

Die umgekehrte Variante, bei der das Kontaktelement zunächst mit der Aluminiumlitze und anschließend mit der Kupferlitze verschweißt wird, lieferte ähnlich gute Ergebnisse, nur mit dem Unterschied, dass insgesamt geringere mechanische Festigkeiten erzielt wurden.

Unterscheiden sich die Materialien der Leitungen maßgeblich in ihrer Festigkeit, so kann es von Vorteil sein, wenn das Kontaktelement zunächst mit der Leitung aus dem härteren Material und anschließend mit der Leitung aus dem weicheren Material verschweißt wird.

Das vor- und nachstehend beschriebene Ultraschallschweißverfahren kann von einer speziell zu dessen Ausführung entwickelten Ultraschallschweißvorrichtung ausgeführt werden. Eine solche Ultraschallschweißvorrichtung kann beispielsweise einen Amboss mit einer Ambossfläche zum Aufnehmen des Kontaktelements, eine in Ultraschallschwingungen versetzbare Sonotrode, einen ersten Seitenanschlag und einen zweiten Seitenanschlag umfassen, wobei mindestens eine dieser Komponenten entlang mindestens einer Raumachse bewegbar gelagert sein kann.

Der Amboss, die Sonotrode, der erste Seitenanschlag und der zweite Seitenanschlag können beispielsweise in einer Schweißstellung einen Hohlraum bilden, der in Richtung der ersten Raumachse durch den Amboss und die Sonotrode und in Richtung der zweiten Raumachse durch den ersten Seitenanschlag und den zweiten Seitenanschlag begrenzt ist. Die Ambossfläche kann in der Schweißstellung teilweise vom ersten Seitenanschlag überdeckt sein und ein in der Schweißstellung die Ambossfläche teilweise überdeckender Abschnitt des ersten Seitenanschlags kann durch einen ersten Spalt zum Aufnehmen eines ersten Randabschnitts des Kontaktelements von der Ambossfläche getrennt sein. Zusätzlich oder alternativ kann die Ambossfläche in der Schweißstellung teilweise vom zweiten Seitenanschlag überdeckt sein und ein in der Schweißstellung die Ambossfläche teilweise überdeckender Abschnitt des zweiten Seitenanschlags kann durch einen zweiten Spalt zum Aufnehmen eines zweiten Randabschnitts des Kontaktelements von der Ambossfläche getrennt sein. Der erste und der zweite Spalt können beispielsweise einander gegenüberliegen, um einander gegenliegende Randabschnitte des Kontaktelements aufzunehmen.

Mithilfe einer solchen Ultraschallschweißvorrichtung können Kontaktelemente unterschiedlicher Formen, Größen und/oder Materialien in effizienter Weise im vor- und nachstehend beschriebenen Ultraschallschweißverfahren verarbeitet werden. Beispielsweise können damit Anhaftungen der Leitungen im betreffenden Randabschnitt des Kontaktelements vermieden werden.

Merkmale der Ultraschallschweißvorrichtung können auch Merkmale des vor- und nachstehend beschriebenen Ultraschallschweißverfahrens sein und umgekehrt.

Der Amboss und die Sonotrode können beispielsweise dadurch relativ zueinander bewegt werden, dass die Sonotrode auf den stationären Amboss zubewegt wird. Möglich ist aber auch der umgekehrte Fall oder eine Ausführungsform, bei der sowohl der Amboss als auch die Sonotrode bewegt werden.

Beispielsweise können der Amboss und der erste Seitenanschlag relativ zueinander und/oder der Amboss und der zweite Seitenanschlag relativ zueinander zusätzlich entlang der ersten Raumachse bewegbar sein, um den ersten bzw. zweiten Spalt in seiner Breite zu verstellen. Dadurch ist es möglich, den ersten bzw. zweiten Spalt in seiner Breite so zu verkleinern, dass der darin befindliche Randabschnitt des Kontaktelements fest zwischen dem Amboss und dem jeweiligen Seitenanschlag eingespannt wird. Somit können zusätzliche Spannmittel zum Fixieren des Kontaktelements entfallen. Zudem kann auf diese Weise verhindert werden, dass einzelne Metalldrähte beim Verschweißen in den ersten bzw. zweiten Spalt gedrückt werden, wodurch diese beschädigt werden könnten.

Zweckmäßigerweise können der Amboss und der erste Seitenanschlag bzw. der Amboss und der zweite Seitenanschlag entlang der ersten Raumachse unabhängig von einer Bewegung der Sonotrode relativ zum Amboss verstellbar sein. Ferner können der erste und der zweite Seitenanschlag unabhängig voneinander entlang der ersten Raumrichtung verstellbar sein. Dadurch können die beiden Spalte in ihrer jeweiligen Breite präzise an unterschiedlich hohe Randabschnitte des Kontaktelements angepasst werden.

Ferner ist es möglich, dass die Sonotrode in der Schweißstellung oberhalb des Ambosses angeordnet ist. Anders ausgedrückt kann im Schweißbetrieb in Richtung der ersten, vertikalen Raumachse betrachtet die Sonotrode oben und der Amboss unten liegen. Dadurch können Materialanhaftungen an der Sonotrode vermieden werden.

Ein zweiter Aspekt der Erfindung betrifft ein Ultraschallschweißteil, das im vor- und nachstehend beschriebenen Ultraschallschweißverfahren oder in einem anderen Schweißverfahren hergestellt worden sein kann. Das Ultraschallschweißteil umfasst ein elektrisch leitfähiges Kontaktelement, eine erste Leitung und eine zweite Leitung, deren elektrisch leitfähiges Material von einem elektrisch leitfähigen Material der ersten Leitung abweicht. Dabei sind ein erster Leitungsabschnitt der ersten Leitung durch Ultraschallschweißen auf das Kontaktelement und ein zweiter Leitungsabschnitt der zweiten Leitung durch Ultraschallschweißen auf den ersten Leitungsabschnitt geschweißt.

Ein solches Ultraschallschweißteil widersteht auch relativ hohen mechanischen Belastungen. Darüber hinaus lässt es sich effizient in Serie herstellen.

Merkmale des Ultraschallschweißteils können auch Merkmale des vor- und nachstehend beschriebenen Ultraschallschweißverfahren und/oder der vor- und nachstehend beschriebenen Ultraschallschweißvorrichtung sein und umgekehrt.

Ohne den Umfang der Erfindung in irgendeiner Weise zu beschränken, können Ideen und mögliche Merkmale zu Ausführungsformen der Erfindung unter anderem als auf den nachfolgend beschriebenen Gedanken und Erkenntnissen beruhend angesehen werden.

Gemäß einer Ausführungsform kann der erste Leitungsabschnitt zwischen dem Kontaktelement und der Sonotrode angeordnet werden. Auf diese Weise können die Ultraschallschwingungen unmittelbar von der Sonotrode auf den ersten Leitungsabschnitt übertragen werden. Alternativ ist es möglich, dass das Kontaktelement zwischen dem ersten Leitungsabschnitt und der Sonotrode angeordnet wird.

Gemäß einer Ausführungsform kann der erste Leitungsabschnitt unter einem höheren spezifischen Energieeintrag verschweißt werden als der zweite Leitungsabschnitt. Unter einem spezifischen Energieeintrag kann ein Eintrag einer spezifischen, d. h. auf eine Querschnittsfläche des jeweiligen Leitungsabschnitts bezogenen Energie verstanden werden, die in den jeweiligen Leitungsabschnitt einzuleiten ist, um ein ordnungsgemäßes Schweißergebnis zu erzielen. Anders ausgedrückt können zum Verschweißen des ersten Leitungsabschnitts Schweißparameter gewählt werden, die einen höheren Energieeintrag pro Flächeneinheit anzeigen, als zum Verschweißen des zweiten Leitungsabschnitts. Auf diese Weise kann die mechanische Festigkeit der Schweißverbindung erhöht werden. Beispielsweise kann der erste Leitungsabschnitt im Vergleich zum zweiten Leitungsabschnitt mit einem um mindestens 5 %, vorzugsweise mindestens 10 % oder mindestens 20 % höheren spezifischen Energieeintrag verschweißt werden.

Beispielsweise können die Materialien des ersten Leitungsabschnitts und des Kontaktelements so gewählt werden, dass vorteilhafterweise ein relativ hoher spezifischer Energieeintrag erforderlich ist, um sie miteinander zu verschweißen. Dies kann beispielsweise zutreffen, wenn der erste Leitungsabschnitt und das Kontaktelement aus Kupfer oder einer Kupferlegierung bestehen. Nachdem diese beiden Fügepartner miteinander verschweißt worden sind, kann in einem nachfolgenden Verfahrensschritt ein weiterer Fügepartner in Form des zweiten Leitungsabschnitts hinzugefügt und verschweißt werden. Dabei kann das Material des zweiten Leitungsabschnitts so gewählt werden, dass vorteilhafterweise ein geringerer spezifischer Energieeintrag erforderlich ist, um den zweiten mit dem ersten Leitungsabschnitt zu verschweißen, als dies beim vorangehenden Verschweißen des Kontaktelements mit dem ersten Leitungsabschnitt der Fall war. Insbesondere kann der zweite Leitungsabschnitt aus einem Material bestehen, das im Vergleich zum Material des ersten Leitungsabschnitts eine geringere Festigkeit und/oder einen niedrigeren Schmelzpunkt aufweist. Beispielsweise kann der zweite Leitungsabschnitt aus Aluminium oder einer Aluminiumlegierung bestehen.

Wenn alle Fügepartner in einem gemeinsamen Schweißvorgang miteinander verschweißt würden, müssten hinsichtlich der dabei zu verwendenden Schweißparameter Kompromisse getroffen werden, da unterschiedliche Paarungen von Fügepartnern in der Regel unterschiedliche Schweißparameter erfordern, um jeweils optimale Schweißergebnisse zu erzielen. Dadurch, dass das Kontaktelement, der erste Leitungsabschnitt und der zweite Leitungsabschnitt jedoch in separat aufeinanderfolgenden Schweißvorgängen, d. h. in einer Kaskade, miteinander verschweißt werden, können für jeden Schweißvorgang optimierte Schweißparameter verwendet werden, die an die jeweilige Paarung der Fügepartner optimal angepasst sind.

Insbesondere kann darauf geachtet werden, dass beim ersten Schweißvorgang ein höherer Schweißenergieeintrag erfolgt als beim zweiten Schweißvorgang, sodass die Fügepartner des ersten Schweißvorgangs eine für deren Verschweißung ausreichend hohe Schweißenergie erhalten. Beim zweiten Schweißvorgang kann dann ein niedrigerer Schweißenergieeintrag erfolgen, der für das Verschweißen der dortigen Fügepartner ausreicht. Auf diese Weise kann der zweite, beispielsweise empfindlichere Fügepartner des zweiten Schweißvorgangs vor Beeinträchtigungen oder sogar Beschädigungen bewahrt werden, die möglicherweise auftreten würden, wenn der zweite Fügepartner die gleiche Schweißenergie wie die Fügepartner des ersten Schweißvorgangs erhielte.

Gemäß einer Ausführungsform kann mindestens einer der folgenden Schweißparameter beim Verschweißen des ersten Leitungsabschnitts in seinem Wert größer gewählt werden als beim Verschweißen des zweiten Leitungsabschnitts: eine Amplitude der Ultraschallschwingungen; ein Druck, mit dem der jeweilige Leitungsabschnitt beaufschlagt werden soll, d. h. ein Druck, mit dem der jeweilige Leitungsabschnitt gegen den jeweiligen Fügepartner gedrückt werden soll; eine Schweißenergie, die maximal in die jeweiligen Fügepartner eingebracht werden soll; eine Höhendifferenz zwischen einer vor dem Verschweißen gemessenen Höhe der jeweiligen Fügepartner im kompaktierten Zustand und einer nach dem Verschweißen gemessenen Höhe der jeweiligen Fügepartner im verschweißten Zustand. Auf diese Weise kann der Energieeintrag für den jeweiligen Schweißvorgang sehr präzise kontrolliert werden.

Das Verschweißen kann jeweils durch sogenanntes Energieschweißen unter Einbringung einer vorgegebenen Schweißenergie, durch sogenanntes Höhenschweißen, auch Schweißen auf absolute Höhe oder Absolut-h-Schweißen genannt, und/oder durch sogenanntes Delta-h-Schweißen erfolgen.

Beim Höhenschweißen wird die Schweißung so lange durchgeführt, bis eine festgelegte Höhe des Schweißguts erreicht ist, wobei mit "Schweißgut" hier das Kontaktelement und der erste Leitungsabschnitt bzw. das mit dem ersten Leitungsabschnitt verschweißte Kontaktelement und der zweite Leitungsabschnitt gemeint sind. Im Unterschied zum Energieschweißen endet die Schweißung nicht nach Einbringung einer vorgegebenen Energie, sondern nach Erreichen der vorgegebenen Höhe des gesamten Schweißguts. Diese Absoluthöhe kann für das Verschweißen des ersten Leitungsabschnitts zweckmäßigerweise niedriger gewählt werden als für das Verschweißen des zweiten Leitungsabschnitts.

Beim Delta-h-Schweißen wird die Schweißung so lange durchgeführt, bis eine festgelegte Differenz zwischen dem sogenannten Kompaktiermaß und dem sogenannten Schweißmaß erreicht ist. Das Kompaktiermaß ist das Maß des Schweißguts vor dem Schweißen und wird gemessen, indem die Werkzeuge auf das Schweißgut gefahren werden, um es zu kompaktieren, und die Höhe des kompaktierten Schweißguts gemessen wird. Das Schweißmaß ist das Maß des Schweißguts nach dem Schweißen und wird nach dem Schweißen gemessen. Das Schweißmaß ist in der Regel kleiner als das Kompaktiermaß, da sich die Höhe des Schweißguts während des Schweißens verringert.

Die Schweißenergie ist beim Höhen- und Delta-h-Schweißen also kein Vorgabewert (wie beim Energieschweißen), sondern eine Resultierende.

Gemäß einer Ausführungsform kann der erste Leitungsabschnitt und/oder der zweite Leitungsabschnitt jeweils in einem Schweißraum angeordnet und verschweißt werden, der in Richtung einer ersten Raumachse durch die Sonotrode und einen Schweißabschnitt des Kontaktelements und in Richtung einer zweiten Raumachse durch einen ersten Seitenanschlag und einen zweiten Seitenanschlag begrenzt wird. Dabei können der Schweißabschnitt und der erste Leitungsabschnitt miteinander verschweißt werden.

Bei der ersten und der zweiten Raumachse kann es sich um zueinander orthogonale Achsen handeln. Beispielsweise kann die erste Raumachse eine vertikale Achse und die zweite Raumachse eine horizontale Achse sein oder umgekehrt.

Der Schweißraum kann durch Bewegen des Ambosses, der Sonotrode, des ersten Seitenanschlags und/oder des zweiten Seitenanschlags entlang der ersten und/oder der zweiten Raumachse in seiner Größe und/oder Position verstellbar sein, d. h. vergrößert, verkleinert, geöffnet oder geschlossen werden.

Unter "Seitenanschlag" kann beispielsweise ein Seitenschieber oder eine Tuschierplatte verstanden werden.

Gemäß einer Ausführungsform kann der Schweißraum in Richtung der zweiten Raumachse eine geringere Breite als das Kontaktelement aufweisen. Anders ausgedrückt kann eine Ausdehnung des Schweißabschnitts oder ein Abstand des ersten Seitenanschlags vom zweiten Seitenanschlag, durch den eine Schweißbreite vorgegeben wird, in Richtung der zweiten Raumachse geringer sein als eine maximale Ausdehnung des Kontaktelements in dieser Richtung. Alternativ kann der Schweißraum in seiner Breite mit einer Breite des Kontaktelements im Wesentlichen übereinstimmen.

Dies kann beispielsweise dadurch erreicht werden, dass ein an den Schweißabschnitt angrenzender erster Randabschnitt des Kontaktelements außerhalb des Schweißraums in einem ersten Spalt zwischen dem Amboss und dem ersten Seitenanschlag angeordnet wird, und/oder dadurch, dass ein an den Schweißabschnitt angrenzender zweiter Randabschnitt des Kontaktelements außerhalb des Schweißraums in einem zweiten Spalt zwischen dem Amboss und dem zweiten Seitenanschlag angeordnet wird. Anders ausgedrückt können durch entsprechendes Zustellen des ersten und/oder zweiten Seitenanschlags bestimmte Randabschnitte des Kontaktelements überdeckt werden. Auf diese Weise kann wirksam verhindert werden, dass der erste bzw. zweite Leitungsabschnitt mit dem jeweiligen Randabschnitt verschweißt wird.

Der Schweißabschnitt kann in Richtung der zweiten Raumachse betrachtet zwischen dem ersten und dem zweiten Randabschnitt liegen, wobei der erste und der zweite Randabschnitt jeweils unmittelbar in den Schweißabschnitt übergehen können.

Gemäß einer Ausführungsform kann zum Bilden des Schweißraums der erste Seitenanschlag so weit entlang der zweiten Raumachse bewegt werden, bis er an einer ersten Seite des Kontaktelements anschlägt. Zusätzlich oder alternativ kann der zweite Seitenanschlag so weit entlang der zweiten Raumachse bewegt werden, bis er an einer zweiten Seite des Kontaktelements anschlägt. Anders ausgedrückt kann die Breite des Schweißraums auch so eingestellt werden, dass sie mit der Breite des Kontaktelements im Wesentlichen übereinstimmt.

Gemäß einer Ausführungsform kann der erste Randabschnitt zwischen dem Amboss und dem ersten Seitenanschlag fixiert werden, indem der Amboss und der erste Seitenanschlag relativ zueinander in einander entgegengesetzten Richtungen bewegt werden. Zusätzlich oder alternativ zum ersten Randabschnitt kann der zweite Randabschnitt zwischen dem Amboss und dem zweiten Seitenanschlag fixiert werden, indem der Amboss und der zweite Seitenanschlag relativ zueinander in einander entgegengesetzten Richtungen bewegt werden. Somit können zusätzliche Spannmittel zum Fixieren des Kontaktelements entfallen. Zudem kann auf diese Weise verhindert werden, dass einzelne Metalldrähte beim Verschweißen in den ersten bzw. zweiten Spalt gedrückt werden, wodurch diese beschädigt werden könnten.

Gemäß einer Ausführungsform können das Anordnen und das Verschweißen des ersten Leitungsabschnitts und des zweiten Leitungsabschnitts so erfolgen, dass die mit dem Kontaktelement verschweißte erste Leitung in einer anderen Richtung als die mit dem Kontaktelement verschweißte zweite Leitung vom Kontaktelement abgeht. Anders ausgedrückt können der erste Leitungsabschnitt und der zweite Leitungsabschnitt relativ zueinander so ausgerichtet werden, dass deren jeweilige Längsachsen deutlich sichtbar voneinander abweichen und demzufolge auch die Leitungen, genauer die an die jeweiligen verschweißten Leitungsabschnitte angrenzenden nicht verschweißten Leitungsabschnitte der Leitungen, in unterschiedlichen Richtungen, beispielsweise in einander entgegengesetzten, zueinander senkrechten oder zueinander schrägen Richtungen, vom Kontaktelement abgehen. Anders ausgedrückt ist es möglich, dass die jeweiligen Längsachsen der Leitungen im Wesentlichen auf einer (gedachten) gemeinsamen geraden Linie liegen oder sich schneiden. Die beiden Leitungen können alternativ auch in der gleichen Richtung vom Kontaktelement abgehen.

Gemäß einer Ausführungsform kann das Ultraschallschweißverfahren ferner folgende Schritte umfassen, die in der nachstehend angegebenen Reihenfolge, beispielsweise im Anschluss an den vorstehend beschriebenen Schritt (iv), oder einer anderen Reihenfolge ausgeführt werden können: (v) Anordnen des mit dem ersten Leitungsabschnitt und dem zweiten Leitungsabschnitt verschweißten Kontaktelements und eines dritten Leitungsabschnitts mindestens einer dritten Leitung zwischen dem Amboss und der Sonotrode, sodass der dritte Leitungsabschnitt zwischen dem mit dem ersten Leitungsabschnitt verschweißten zweiten Leitungsabschnitt und der Sonotrode liegt; (vi) Verschweißen des mit dem ersten Leitungsabschnitt verschweißten zweiten Leitungsabschnitts und des dritten Leitungsabschnitts, wobei der Amboss und die Sonotrode relativ zueinander in die einander entgegengesetzten Richtungen bewegt werden, um den mit dem ersten Leitungsabschnitt verschweißten zweiten Leitungsabschnitt und den dritten Leitungsabschnitt gegeneinanderzudrücken, und wobei die Sonotrode in Ultraschallschwingungen versetzt wird.

Dabei kann die dritte Leitung aus dem gleichen elektrisch leitfähigen Material wie die erste und/oder die zweite Leitung und/oder wie das Kontaktelement sein. Möglich ist auch, dass die dritte Leitung aus einem anderen elektrisch leitfähigen Material als die erste und/oder zweite Leitung und/oder als das Kontaktelement ist. Somit kann das Kontaktelement mit drei oder mehr als drei Leitungen aus zwei oder mehr als zwei unterschiedlichen elektrisch leitfähigen Materialien in effizienter Weise zu einem stabilen elektrisch leitfähigen Ultraschallschweißteil verbunden werden.

Gemäß einer Ausführungsform kann das Kontaktelement zumindest teilweise aus dem elektrisch leitfähigen Material der ersten Leitung ausgebildet sein. Dadurch kann ein ausreichend kompaktes, homogenes Ausgangsteil für den nachfolgenden Schweißvorgang bereitgestellt werden. Zusätzlich oder alternativ kann das Kontaktelement zumindest teilweise aus dem elektrisch leitfähigen Material der zweiten Leitung ausgebildet sein.

Das Kontaktelement kann zumindest teilweise aus einem anderen elektrisch leitfähigen Material als die Leitungen ausgebildet sein. Zusätzlich kann das Kontaktelement zumindest teilweise beschichtet sein, beispielsweise mit einer Schicht aus Silber, einer Silberlegierung, Nickel oder einer Nickellegierung.

Gemäß einer Ausführungsform kann das elektrisch leitfähige Material der ersten Leitung Kupfer oder eine Kupferlegierung sein. Zusätzlich oder alternativ kann das elektrisch leitfähige Material der zweiten Leitung Aluminium oder eine Aluminiumlegierung sein. Durch die Verwendung einer Kupferlitze kann eine sehr gute elektrische Leitfähigkeit der fertigen Schweißverbindung gewährleistet werden. Wird die Kupferlitze mit einer Aluminium- statt einer weiteren Kupferlitze als der zweiten Leitung kombiniert, kann zudem das Gewicht der fertigen Schweißverbindung deutlich verringert werden.

Gemäß einer alternativen Ausführungsform kann das elektrisch leitfähige Material der ersten Leitung Aluminium oder eine Aluminiumlegierung sein. Zusätzlich oder alternativ kann das elektrisch leitfähige Material der zweiten Leitung Kupfer oder eine Kupferlegierung sein.

Gemäß einer Ausführungsform kann das Ultraschallschweißteil ferner mindestens eine dritte Leitung umfassen. Dabei kann ein dritter Leitungsabschnitt der dritten Leitung durch Ultraschallschweißen auf den zweiten Leitungsabschnitt geschweißt sein, beispielsweise in entsprechenden zusätzlichen Schritten des vor- und nachstehend beschriebenen Ultraschallschweißverfahrens. Ein solches Ultraschallschweißteil widersteht auch relativ hohen mechanischen Belastungen. Darüber hinaus lässt es sich effizient in Serie herstellen.

Es wird darauf hingewiesen, dass mögliche Merkmale und Vorteile von Ausführungsformen der Erfindung vor- und nachstehend teils mit Bezug auf ein Ultraschallschweißverfahren, teils mit Bezug auf eine Ultraschallschweißvorrichtung zum Ausführen dieses Verfahrens beschrieben werden. Ein Fachmann wird erkennen, dass die für einzelne Ausführungsformen beschriebenen Merkmale in analoger und geeigneter Weise auf andere Ausführungsformen übertragen, angepasst und/oder ausgetauscht werden können, um zu weiteren Ausführungsformen der Erfindung und möglicherweise zu Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Figur 1 zeigt eine Ultraschallschweißvorrichtung zur Ausführung eines Ultraschallschweißverfahrens gemäß einer Ausführungsform der vorliegenden Erfindung.
Figur 2 zeigt ein Flussdiagramm zur Veranschaulichung eines Ultraschallschweißverfahrens gemäß einer Ausführungsform der vorliegenden Erfindung.
Figur 3 zeigt ein Ultraschallschweißteil gemäß einer Ausführungsform der vorliegenden Erfindung in der Draufsicht.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VORTEILHAFTER AUSFÜHRUNGSFORMEN

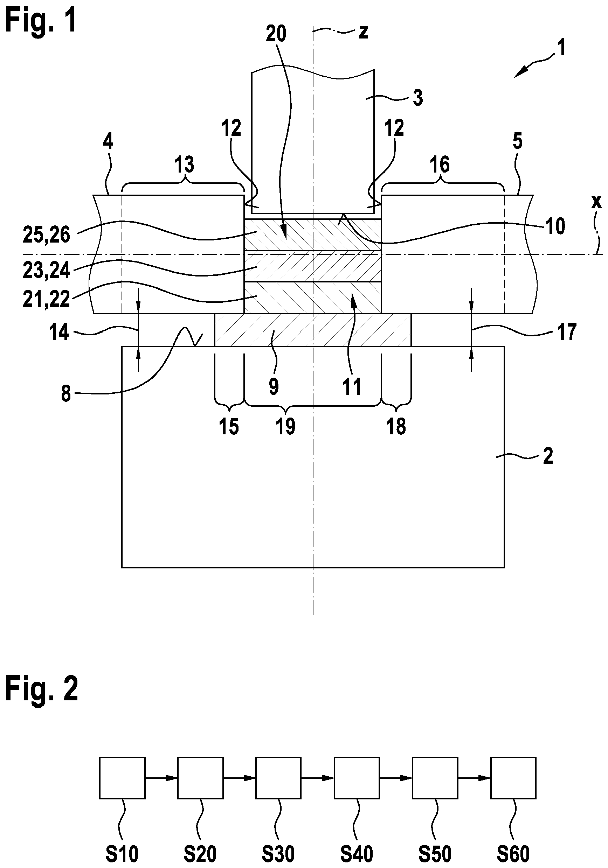

Figur 1 zeigt eine Ultraschallschweißvorrichtung 1, die einen Amboss 2, eine in Ultraschallschwingungen versetzbare Sonotrode 3, einen ersten Seitenanschlag 4 und einen zweiten Seitenanschlag 5 umfasst. Der Amboss 2 und die Sonotrode 3 sind relativ zueinander entlang einer ersten Raumachse z, hier einer vertikalen Achse, bewegbar. Der erste Seitenanschlag 4 und der zweite Seitenanschlag 5 sind relativ zueinander entlang einer zweiten Raumachse x, hier einer horizontalen Achse, bewegbar. In diesem Beispiel befindet sich der Amboss 2 unterhalb der Sonotrode 3. Der Amboss 2 weist eine Ambossfläche 8 auf, auf der ein Kontaktelement 9 platziert ist, beispielsweise in Form eines Kupfer- oder Aluminiumplättchens. Die Sonotrode 3 weist eine der Ambossfläche 8 gegenüberliegende Sonotrodenfläche 10 zum Einkoppeln der Ultraschallschwingungen in die jeweiligen Fügepartner auf.

Der Amboss 2, die Sonotrode 3, der erste Seitenanschlag 4 und der zweite Seitenanschlag 5 befinden sich in Figur 1 in einer Schweißstellung, in der sie einen Hohlraum 11 bilden, der in Richtung der ersten Raumachse z durch die Ambossfläche 8 und die Sonotrodenfläche 10 und in Richtung der zweiten Raumachse x durch zwei einander gegenüberliegende Stirnflächen 12 der Seitenanschläge 4, 5 begrenzt ist.

Dabei ist ein linker Abschnitt der Ambossfläche 8 durch einen ersten Endabschnitt 13 des ersten Seitenanschlags 4 überdeckt, wobei dieser erste Endabschnitt 13 in Richtung der ersten Raumachse z durch einen ersten Spalt 14 von der Ambossfläche 8 getrennt ist. In diesem ersten Spalt 14 kann ein erster Randabschnitt 15 des Kontaktelements 9 eingeklemmt sein.

Zusätzlich ist in diesem Beispiel ein rechter Abschnitt der Ambossfläche 8 durch einen zweiten Endabschnitt 16 des zweiten Seitenanschlags 5 überdeckt, wobei dieser zweite Endabschnitt 16 in Richtung der ersten Raumachse z durch einen zweiten Spalt 17 von der Ambossfläche 8 getrennt ist. In diesem zweiten Spalt 17 kann ein zweiter Randabschnitt 18 des Kontaktelements 9 eingeklemmt sein.

Zum Fixieren des Kontaktelements 9 können die beiden Seitenanschläge 4, 5 zusätzlich in Richtung der ersten Raumachse z relativ zur Ambossfläche 8 bewegbar sein.

Zwischen den beiden Randabschnitten 15, 18 erstreckt sich ein Schweißabschnitt 19 des Kontaktelements 9, der zusammen mit der ihm gegenüberliegenden Sonotrodenfläche 10 und den beiden Stirnflächen 12 einen Schweißraum 20 begrenzt. In diesem Schweißraum 20 sind ein erster Leitungsabschnitt 21 einer ersten Leitung 22 und ein zweiter Leitungsabschnitt 23 einer zweiten Leitung 24 in Richtung der ersten Raumachse z übereinander angeordnet, wobei der erste Leitungsabschnitt 21 auf den Schweißabschnitt 19 und der zweite Leitungsabschnitt 23 auf den ersten Leitungsabschnitt 21 geschweißt ist. Der Schweißraum 20 weist in diesem Beispiel in Richtung der zweiten Raumachse x eine deutlich geringere Breite als das Kontaktelement 9 auf.

Der erste Leitungsabschnitt 21 und der zweite Leitungsabschnitt 23 unterscheiden sich in ihren elektrisch leitfähigen Materialien. In diesem Beispiel ist der erste Leitungsabschnitt 21 aus Kupfer oder einer Kupferlegierung und der zweite Leitungsabschnitt 23 aus Aluminium oder einer Aluminiumlegierung. Möglich ist auch der umgekehrte Fall oder eine beliebige andere Kombination unterschiedlicher elektrisch leitfähiger Materialien.

Das Kontaktelement 9 ist in diesem Beispiel ebenfalls aus Kupfer oder einer Kupferlegierung ausgebildet. Alternativ kann das Kontaktelement 9 aus Aluminium oder einer Aluminiumlegierung oder einem sonstigen geeigneten Metall oder einer sonstigen geeigneten Metalllegierung ausgebildet sein.

Zusätzlich ist in diesem Beispiel ein dritter Leitungsabschnitt 25 einer dritten Leitung 26 im Schweißraum 20 angeordnet, wobei der dritte Leitungsabschnitt 25 auf den zweiten Leitungsabschnitt 23 geschweißt ist. Der dritte Leitungsabschnitt 25 kann ebenfalls aus Kupfer oder einer Kupferlegierung sein; er kann aber auch aus Aluminium oder einer Aluminiumlegierung oder aus einem beliebigen anderen Metall oder einer beliebigen anderen Metalllegierung sein.

Ein beispielhafter Ablauf eines Ultraschallschweißverfahrens, in dem die drei Leitungsabschnitte 21, 23, 25 miteinander bzw. mit dem Kontaktelement 9 im Schweißraum 20 verschweißt werden können, wird nachstehend näher beschrieben. Ein entsprechendes Flussdiagramm ist in Figur 2 dargestellt.

In Schritt S10 werden das Kontaktelement 9 und der erste Leitungsabschnitt 21 der ersten Leitung 22 zwischen dem Amboss 2 und der Sonotrode 3 angeordnet, beispielsweise im Hohlraum 11, sodass der erste Leitungsabschnitt 21 zwischen dem Kontaktelement 9 und der Sonotrode 3 liegt.

In Schritt S20 wird der erste Leitungsabschnitt 21 mit dem Kontaktelement 9 verschweißt, beispielsweise im Schweißraum 20, wobei der Amboss 2 und die Sonotrode 3 relativ zueinander in einander entgegengesetzten Richtungen bewegt werden, um das Kontaktelement 9 und den ersten Leitungsabschnitt 21 gegeneinanderzudrücken, und wobei die Sonotrode 3 in Ultraschallschwingungen versetzt wird.

In Schritt S30 werden das mit dem ersten Leitungsabschnitt 21 verschweißte Kontaktelement 9 und der zweite Leitungsabschnitt 23 der zweiten Leitung 24, deren elektrisch leitfähiges Material vom elektrisch leitfähigen Material der ersten Leitung 22 abweicht, zwischen dem Amboss 2 und der Sonotrode 3 angeordnet, beispielsweise im Hohlraum 11, sodass der zweite Leitungsabschnitt 23 zwischen dem mit dem Kontaktelement 9 verschweißten ersten Leitungsabschnitt 21 und der Sonotrode 3 liegt.

In Schritt S40 werden der mit dem Kontaktelement 9 verschweißte erste Leitungsabschnitt 21 und der zweite Leitungsabschnitt 23 miteinander verschweißt, beispielsweise im Schweißraum 20, wobei der Amboss 2 und die Sonotrode 3 relativ zueinander in die einander entgegengesetzten Richtungen bewegt werden, um den mit dem Kontaktelement 9 verschweißten ersten Leitungsabschnitt 21 und den zweiten Leitungsabschnitt 23 gegeneinanderzudrücken, und wobei die Sonotrode 3 in Ultraschallschwingungen versetzt wird.

In einem optionalen Schritt S50 werden das mit dem ersten Leitungsabschnitt 21 und dem zweiten Leitungsabschnitt 23 verschweißte Kontaktelement 9 und der dritte Leitungsabschnitt 25 der dritten Leitung 26 zwischen dem Amboss 2 und der Sonotrode 3 angeordnet, beispielsweise im Hohlraum 11, sodass der dritte Leitungsabschnitt 25 zwischen dem mit dem ersten Leitungsabschnitt 21 verschweißten zweiten Leitungsabschnitt 23 und der Sonotrode 3 liegt.

In einem optionalen Schritt S60 werden schließlich der mit dem ersten Leitungsabschnitt 21 verschweißte zweite Leitungsabschnitt 23 und der dritte Leitungsabschnitt 25 miteinander verschweißt, beispielsweise im Schweißraum 20, wobei der Amboss 2 und die Sonotrode 3 relativ zueinander in die einander entgegengesetzten Richtungen bewegt werden, um den mit dem ersten Leitungsabschnitt 21 verschweißten zweiten Leitungsabschnitt 23 und den dritten Leitungsabschnitt 25 gegeneinanderzudrücken, und wobei die Sonotrode 3 in Ultraschallschwingungen versetzt wird.

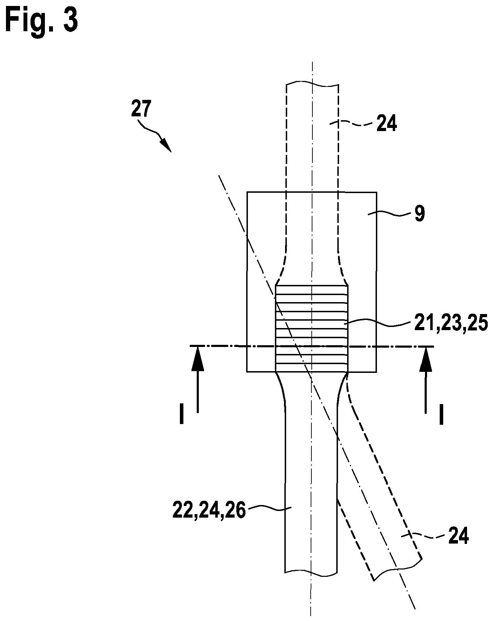

Figur 3 zeigt ein Ultraschallschweißteil 27, das in diesem Beispiel mittels der Ultraschallschweißvorrichtung 1 in dem vorstehend beschriebenen Ultraschallschweißverfahren hergestellt worden ist und somit dem fertig verschweißten Kontaktelement 9 aus Figur 1 entspricht. Das Ultraschallschweißteil 27 kann aber auch auf andere Art und Weise als anhand von Figur 1 und Figur 2 beschrieben hergestellt worden sein.

Der in Figur 3 gezeigten Draufsicht des Ultraschallschweißteils 27 ist zu entnehmen, dass die Leitungen 22, 24 jeweils in der gleichen Richtung oder, wie mit gestrichelten Linien markiert, in unterschiedlichen, insbesondere einander entgegengesetzten Richtungen vom Kontaktelement 9 abgehen können. Zwei sich schneidende Strich-Punkt-Linien markieren beispielhaft mögliche Längsachsen der Leitungen 22, 24. Ferner ist eine Schnittlinie I-I eingezeichnet, die einen Schnittverlauf des in Figur 1 dargestellten Schnitts durch das Kontaktelement 9 und die drei Leitungsabschnitte 21, 23, 25 markiert.

Abschließend wird darauf hingewiesen, dass Begriffe wie "aufweisend", "umfassend" usw. keine anderen Elemente oder Schritte ausschließen und Begriffe wie "eine" oder "ein" keine Vielzahl ausschließen. Ferner wird darauf hingewiesen, dass Merkmale oder Schritte, die mit Verweis auf eines der vorstehend beschriebenen Ausführungsbeispiele beschrieben worden sind, auch in Kombination mit anderen Merkmalen oder Schritten anderer der vorstehend beschriebenen Ausführungsbeispiele verwendet werden können. Bezugszeichen in den Ansprüchen sind nicht als Einschränkung anzusehen.

### BEZUGSZEICHENLISTE

- 1: Ultraschallschweißvorrichtung
- 2: Amboss
- 3: Sonotrode
- 4: erster Seitenanschlag
- 5: zweiter Seitenanschlag
- 8: Ambossfläche
- 9: Kontaktelement
- 10: Sonotrodenfläche
- 11: Hohlraum
- 12: Stirnfläche
- 13: erster Endabschnitt / in der Schweißstellung die Ambossfläche teilweise überdeckender Abschnitt des ersten Seitenanschlags
- 14: erster Spalt
- 15: erster Randabschnitt
- 16: zweiter Endabschnitt / in der Schweißstellung die Ambossfläche teilweise überdeckender Abschnitt des zweiten Seitenanschlags
- 17: zweiter Spalt
- 18: zweiter Randabschnitt
- 19: Schweißabschnitt
- 20: Schweißraum
- 21: erster Leitungsabschnitt
- 22: erste Leitung
- 23: zweiter Leitungsabschnitt
- 24: zweite Leitung
- 25: dritter Leitungsabschnitt
- 26: dritte Leitung
- 27: Ultraschallschweißteil
- x: zweite Raumachse
- z: erste Raumachse

## Patentansprüche

1. Ultraschallschweißverfahren zum Verschweißen eines elektrisch leitfähigen Kontaktelements (9) mit mindestens zwei Leitungen (22, 24, 26) aus unterschiedlichen elektrisch leitfähigen Materialien, wobei das Ultraschallschweißverfahren umfasst:
Anordnen des Kontaktelements (9) und eines ersten Leitungsabschnitts (21) einer ersten (22) der Leitungen (22, 24, 26) zwischen einem Amboss (2) und einer Sonotrode (3);
Verschweißen des Kontaktelements (9) und des ersten Leitungsabschnitts (21), wobei der Amboss (2) und die Sonotrode (3) relativ zueinander in einander entgegengesetzten Richtungen bewegt werden, um das Kontaktelement (9) und den ersten Leitungsabschnitt (21) gegeneinanderzudrücken, und wobei die Sonotrode (3) in Ultraschallschwingungen versetzt wird;
Anordnen des mit dem ersten Leitungsabschnitt (21) verschweißten Kontaktelements (9) und eines zweiten Leitungsabschnitts (23) einer zweiten (24) der Leitungen (22, 24, 26), deren elektrisch leitfähiges Material von einem elektrisch leitfähigen Material der ersten Leitung (22) abweicht, zwischen dem Amboss (2) und der Sonotrode (3), sodass der zweite Leitungsabschnitt (23) zwischen dem mit dem Kontaktelement (9) verschweißten ersten Leitungsabschnitt (21) und der Sonotrode (3) liegt; und
Verschweißen des mit dem Kontaktelement (9) verschweißten ersten Leitungsabschnitts (21) und des zweiten Leitungsabschnitts (23), wobei der Amboss (2) und die Sonotrode (3) relativ zueinander in die einander entgegengesetzten Richtungen bewegt werden, um den mit dem Kontaktelement (9) verschweißten ersten Leitungsabschnitt (21) und den zweiten Leitungsabschnitt (23) gegeneinanderzudrücken, und wobei die Sonotrode (3) in Ultraschallschwingungen versetzt wird.

2. Ultraschallschweißverfahren nach Anspruch 1,
wobei der erste Leitungsabschnitt (21) zwischen dem Kontaktelement (9) und der Sonotrode (3) angeordnet wird.

3. Ultraschallschweißverfahren nach einem der vorhergehenden Ansprüche,
wobei der erste Leitungsabschnitt (21) unter einem höheren spezifischen Energieeintrag verschweißt wird als der zweite Leitungsabschnitt (23).

4. Ultraschallschweißverfahren nach einem der vorhergehenden Ansprüche,
wobei mindestens einer der folgenden Schweißparameter beim Verschweißen des ersten Leitungsabschnitts (21) in seinem Wert größer gewählt wird als beim Verschweißen des zweiten Leitungsabschnitts (23):
eine Amplitude der Ultraschallschwingungen;
ein Druck, mit dem der jeweilige Leitungsabschnitt (21, 23) beaufschlagt werden soll;
eine Schweißenergie;
eine Höhendifferenz zwischen einer vor dem Verschweißen gemessenen Höhe der jeweiligen Fügepartner (9, 21, 23) und einer nach dem Verschweißen gemessenen Höhe der jeweiligen Fügepartner (9, 21, 23).

5. Ultraschallschweißverfahren nach einem der vorhergehenden Ansprüche,
wobei der erste Leitungsabschnitt (21) und der zweite Leitungsabschnitt (23) jeweils in einem Schweißraum (20) angeordnet und verschweißt werden, der in Richtung einer ersten Raumachse (z) durch die Sonotrode (3) und einen Schweißabschnitt (19) des Kontaktelements (9) und in Richtung einer zweiten Raumachse (x) durch einen ersten Seitenanschlag (4) und einen zweiten Seitenanschlag (5) begrenzt wird, wobei der Schweißabschnitt (19) und der erste Leitungsabschnitt (21) miteinander verschweißt werden.

6. Ultraschallschweißverfahren nach Anspruch 5,
wobei der Schweißraum (20) in Richtung der zweiten Raumachse (x) eine geringere Breite als das Kontaktelement (9) aufweist; und/oder
wobei ein an den Schweißabschnitt (19) angrenzender erster Randabschnitt (15) des Kontaktelements (9) außerhalb des Schweißraums (20) in einem ersten Spalt (14) zwischen dem Amboss (2) und dem ersten Seitenanschlag (4) angeordnet wird; und/oder
wobei ein an den Schweißabschnitt (19) angrenzender zweiter Randabschnitt (18) des Kontaktelements (9) außerhalb des Schweißraums (20) in einem zweiten Spalt (17) zwischen dem Amboss (2) und dem zweiten Seitenanschlag (5) angeordnet wird.

7. Ultraschallschweißverfahren nach Anspruch 6,
wobei der erste Randabschnitt (15) zwischen dem Amboss (2) und dem ersten Seitenanschlag (4) fixiert wird, indem der Amboss (2) und der erste Seitenanschlag (4) relativ zueinander in einander entgegengesetzten Richtungen entlang der ersten Raumachse (z) bewegt werden; und/oder
wobei der zweite Randabschnitt (18) zwischen dem Amboss (2) und dem zweiten Seitenanschlag (5) fixiert wird, indem der Amboss (2) und der zweite Seitenanschlag (5) relativ zueinander in einander entgegengesetzten Richtungen entlang der ersten Raumachse (z) bewegt werden.

8. Ultraschallschweißverfahren nach einem der Ansprüche 5 bis 7,
wobei zum Bilden des Schweißraums (20) der erste Seitenanschlag (4) so weit entlang der zweiten Raumachse (x) bewegt wird, bis er an einer ersten Seite des Kontaktelements (9) anschlägt, und/oder der zweite Seitenanschlag (5) so weit entlang der zweiten Raumachse (x) bewegt wird, bis er an einer zweiten Seite des Kontaktelements (9) anschlägt.

9. Ultraschallschweißverfahren nach einem der vorhergehenden Ansprüche,
wobei der erste Leitungsabschnitt (21) und der zweite Leitungsabschnitt (23) so angeordnet und verschweißt werden, dass die mit dem Kontaktelement (9) verschweißte erste Leitung (22) in einer anderen Richtung als die mit dem Kontaktelement (9) verschweißte zweite Leitung (24) vom Kontaktelement (9) abgeht.

10. Ultraschallschweißverfahren nach einem der vorhergehenden Ansprüche, ferner umfassend:
Anordnen des mit dem ersten Leitungsabschnitt (21) und dem zweiten Leitungsabschnitt (23) verschweißten Kontaktelements (9) und eines dritten Leitungsabschnitts (25) mindestens einer dritten Leitung (26) zwischen dem Amboss (2) und der Sonotrode (3), sodass der dritte Leitungsabschnitt (25) zwischen dem mit dem ersten Leitungsabschnitt (21) verschweißten zweiten Leitungsabschnitt (23) und der Sonotrode (3) liegt;
Verschweißen des mit dem ersten Leitungsabschnitt (21) verschweißten zweiten Leitungsabschnitts (23) und des dritten Leitungsabschnitts (25), wobei der Amboss (2) und die Sonotrode (3) relativ zueinander in die einander entgegengesetzten Richtungen bewegt werden, um den mit dem ersten Leitungsabschnitt (21) verschweißten zweiten Leitungsabschnitt (23) und den dritten Leitungsabschnitt (25) gegeneinanderzudrücken, und wobei die Sonotrode (3) in Ultraschallschwingungen versetzt wird.

11. Ultraschallschweißteil (27), hergestellt in einem Ultraschallschweißverfahren nach einem der vorhergehenden Ansprüche, wobei das Ultraschallschweißteil (27) umfasst:
ein elektrisch leitfähiges Kontaktelement (9);
eine erste Leitung (22); und
eine zweite Leitung (24), deren elektrisch leitfähiges Material von einem elektrisch leitfähigen Material der ersten Leitung (22) abweicht;
wobei ein erster Leitungsabschnitt (21) der ersten Leitung (22) durch Ultraschallschweißen auf das Kontaktelement (9) geschweißt ist;
wobei ein zweiter Leitungsabschnitt (23) der zweiten Leitung (24) durch Ultraschallschweißen auf den ersten Leitungsabschnitt (21) geschweißt ist.

12. Ultraschallschweißteil (27) nach Anspruch 11,
wobei das Kontaktelement (9) zumindest teilweise aus dem elektrisch leitfähigen Material der ersten Leitung (22) ausgebildet ist; und/oder
wobei das Kontaktelement (9) zumindest teilweise aus dem elektrisch leitfähigen Material der zweiten Leitung (24) ausgebildet ist.

13. Ultraschallschweißteil (27) nach Anspruch 11 oder 12,
wobei das elektrisch leitfähige Material der ersten Leitung (22) Kupfer oder eine Kupferlegierung ist; und/oder
wobei das elektrisch leitfähige Material der zweiten Leitung (24) Aluminium oder eine Aluminiumlegierung ist.

14. Ultraschallschweißteil (27) nach Anspruch 11 oder 12,
wobei das elektrisch leitfähige Material der ersten Leitung (22) Aluminium oder eine Aluminiumlegierung ist; und/oder
wobei das elektrisch leitfähige Material der zweiten Leitung (24) Kupfer oder eine Kupferlegierung ist.

15. Ultraschallschweißteil (27) nach einem der Ansprüche 11 bis 14, ferner umfassend:
mindestens eine dritte Leitung (26), wobei ein dritter Leitungsabschnitt (25) der dritten Leitung (26) durch Ultraschallschweißen auf den zweiten Leitungsabschnitt (23) geschweißt ist.

## Claims

1. Ultrasonic welding method for welding an electrically conductive contact element (9) to at least two conductors (22, 24, 26) of different electrically conductive materials, wherein the ultrasonic welding method comprises:
arranging the contact element (9) and a first conductor portion (21) of a first (22) one of the conductors (22, 24, 26) between an anvil (2) and a sonotrode (3);
welding the first conductor portion (21) to the contact element (9), wherein the anvil (2) and the sonotrode (3) are moved relative to each other in opposite directions to press the contact element (9) and the first conductor portion (21) against each other, and wherein the sonotrode (3) is vibrated with ultrasonic vibrations;
arranging the contact element (9), which is welded to the first conductor portion (21), and a second conductor portion (23) of a second (24) one of the conductors (22, 24, 26), the electrically conductive material of which differs from an electrically conductive material of the first conductor (22), between the anvil (2) and the sonotrode (3) so that the second conductor portion (23) lies between the sonotrode (3) and the first conductor portion (21) welded to the contact element (9); and
welding the second conductor portion (23) to the first conductor portion (21) welded to the contact element (9), wherein the anvil (2) and the sonotrode (3) are moved relative to each other in the opposite directions to press the first conductor portion (21) welded to the contact element (9) and the second conductor portion (23) against each other, and wherein the sonotrode (3) is vibrated with ultrasonic vibrations.

2. Ultrasonic welding method according to claim 1,
wherein the first conductor portion (21) is arranged between the contact element (9) and the sonotrode (3).

3. Ultrasonic welding method according to one of the preceding claims,
wherein the first conductor portion (21) is welded under a higher specific energy input than the second conductor portion (23).

4. Ultrasonic welding method according to one of the preceding claims,
wherein at least one of the following welding parameters is selected to be greater in value when welding the first conductor portion (21) than when welding the second conductor portion (23):
an amplitude of the ultrasonic vibrations;
a pressure to be applied to the respective conductor portion (21, 23);
a welding energy;
a height difference between a height of the respective joining partners (9, 21, 23) measured before welding and a height of the respective joining partners (9, 21, 23) measured after welding.

5. Ultrasonic welding method according to one of the preceding claims,
wherein the first conductor portion (21) and the second conductor portion (23) are each arranged in a welding chamber (20) and welded together, which welding chamber is defined in a direction of a first spatial axis (z) by the sonotrode (3) and a welding portion (19) of the contact element (9) and in a direction of a second spatial axis (x) by a first lateral stop (4) and a second lateral stop (5), wherein the welding portion (19) and the first conductor portion (21) are welded together.

6. Ultrasonic welding method according to claim 5,
wherein the welding chamber (20) has a smaller width in the direction of the second spatial axis (x) than the contact element (9); and/or
wherein a first edge portion (15) of the contact element (9) adjacent to the welding portion (19) is arranged outside the welding chamber (20) in a first gap (14) between the anvil (2) and the first lateral stop (4); and/or
wherein a second edge portion (18) of the contact element (9) adjacent to the welding portion (19) is arranged outside the welding chamber (20) in a second gap (17) between the anvil (2) and the second lateral stop (5).

7. Ultrasonic welding method according to claim 6,
wherein the first edge portion (15) is fixed between the anvil (2) and the first lateral stop (4) by moving the anvil (2) and the first lateral stop (4) relative to each other in opposite directions along the first spatial axis (z); and/or
wherein the second edge portion (18) is fixed between the anvil (2) and the second lateral stop (5) by moving the anvil (2) and the second lateral stop (5) relative to each other in opposite directions along the first spatial axis (z).

8. Ultrasonic welding method according to one of claims 5 to 7,
wherein, to form the welding chamber (20), the first lateral stop (4) is moved so far along the second spatial axis (x) until it strikes against a first side of the contact element (9), and/or the second lateral stop (5) is moved so far along the second spatial axis (x) until it strikes against a second side of the contact element (9).

9. Ultrasonic welding method according to one of the preceding claims,
wherein the first conductor portion (21) and the second conductor portion (23) are arranged and welded such that the first conductor (22) welded to the contact element (9) extends from the contact element (9) in a different direction than the second conductor (24) welded to the contact element (9).

10. Ultrasonic welding method according to one of the preceding claims, further comprising:
arranging the contact element (9), which is welded to the first conductor portion (21) and the second conductor portion (23), and a third conductor portion (25) of at least a third conductor (26) between the anvil (2) and the sonotrode (3), such that the third conductor portion (25) lies between the second conductor portion (23) welded to the first conductor portion (21) and the sonotrode (3);
welding the third conductor portion (25) to the second conductor portion (23) welded to the first conductor portion (21), wherein the anvil (2) and the sonotrode (3) are moved relative to each other in the opposite directions to press the third conductor portion (25) and the second conductor portion (23) welded to the first conductor portion (21) against each other, and wherein the sonotrode (3) vibrates with ultrasonic vibrations.

11. Ultrasonic welding part (27) produced in an ultrasonic welding method according to one of the preceding claims, wherein the ultrasonic welding part (27) comprises:
an electrically conductive contact element (9);
a first conductor (22); and
a second conductor (24), the electrically conductive material of which differs from an electrically conductive material of the first conductor (22);
wherein a first conductor portion (21) of the first conductor (22) is welded to the contact element (9) by ultrasonic welding;
wherein a second conductor portion (23) of the second conductor (24) is welded to the first conductor portion (21) by ultrasonic welding.

12. Ultrasonic welding part (27) according to claim 11,
wherein the contact element (9) is formed at least partially of the electrically conductive material of the first conductor (22); and/or
wherein the contact element (9) is formed at least partially of the electrically conductive material of the second conductor (24).

13. Ultrasonic welding part (27) according to claim **11** or 12,
wherein the electrically conductive material of the first conductor (22) is copper or a copper alloy; and/or
wherein the electrically conductive material of the second conductor (24) is aluminum or an aluminum alloy.

14. Ultrasonic welding part (27) according to claim **11** or 12,
wherein the electrically conductive material of the first conductor (22) is aluminum or an aluminum alloy; and/or
wherein the electrically conductive material of the second conductor (24) is copper or a copper alloy.

15. Ultrasonic welding part (27) according to one of claims **11** to 14, further comprising:
at least one third conductor (26), wherein a third conductor portion (25) of the third conductor (26) is welded to the second conductor portion (23) by ultrasonic welding.

## Revendications

1. Procédé de soudage par ultrasons destiné à souder un élément de contact électriquement conducteur (9) à au moins deux lignes (22, 24, 26) en différents matériaux électriquement conducteurs, dans lequel le procédé de soudage par ultrasons comprend de :
disposer l'élément de contact (9) et une première section de ligne (21) d'une première (22) des lignes (22, 24, 26) entre une enclume (2) et une sonotrode (3) ;
souder l'élément de contact (9) et la première section de ligne (21), dans lequel l'enclume (2) et la sonotrode (3) sont déplacées l'une par rapport à l'autre dans des directions opposées pour presser l'élément de contact (9) et la première section de ligne (21) l'une contre l'autre,
et dans lequel la sonotrode (3) est soumise à des vibrations ultrasonores ;
disposer l'élément de contact (9) soudé à la première section de ligne (21) et une deuxième section de ligne (23) d'une deuxième (24) des lignes (22, 24, 26), dont le matériau électriquement conducteur diffère d'un matériau électriquement conducteur de la première ligne (22), entre l'enclume (2) et la sonotrode (3), de sorte que la deuxième section de ligne (23) se situe entre la première section de ligne (21) soudée à l'élément de contact (9) et la sonotrode (3) ; et
souder la première section de ligne (21) soudée à l'élément de contact (9) et la deuxième section de ligne (23), dans lequel l'enclume (2) et la sonotrode (3) sont déplacées l'une par rapport à l'autre dans les directions opposées pour presser la première section de ligne (21) soudée à l'élément de contact (9) et la deuxième section de ligne (23) l'une contre l'autre, et dans lequel la sonotrode (3) est soumise à des vibrations ultrasonores.

2. Procédé de soudage par ultrasons selon la revendication 1, dans lequel la première section de ligne (21) est disposée entre l'élément de contact (9) et la sonotrode (3).

3. Procédé de soudage par ultrasons selon l'une des revendications précédentes,
dans lequel la première section de ligne (21) est soudée sous un apport d'énergie spécifique plus élevé que la deuxième section de ligne (23).

4. Procédé de soudage par ultrasons selon l'une des revendications précédentes,
dans lequel la valeur d'au moins un des paramètres de soudage suivants lors du soudage de la première section de ligne (21) est choisie supérieure à celle utilisée lors du soudage de la deuxième section de ligne (23) :
une amplitude des vibrations ultrasonores ;
une pression à appliquer à la section de ligne (21, 23) respective ;
une énergie de soudage ;
une différence de hauteur entre une hauteur mesurée avant le soudage des pièces à assembler (9, 21, 23) respectives et une hauteur mesurée après le soudage des pièces à assembler (9, 21, 23) respectives.

5. Procédé de soudage par ultrasons selon l'une des revendications précédentes,
dans lequel la première section de ligne (21) et la deuxième section de ligne (23) sont respectivement disposées et soudées dans un espace de soudage (20) qui est délimité par la sonotrode (3) et une section de soudage (19) de l'élément de contact (9) en direction d'un premier axe (z) dans l'espace et par une première butée latérale (4) et une seconde butée latérale (5) en direction d'un second axe (x) dans l'espace, dans lequel la section de soudage (19) et la première section de ligne (21) sont soudées l'une à l'autre.

6. Procédé de soudage par ultrasons selon la revendication 5, dans lequel l'espace de soudage (20) a une largeur en direction du second axe (x) dans l'espace plus petite que celle de l'élément de contact (9) ; et/ou dans lequel une première section de bord (15) de l'élément de contact (9) adjacente à la section de soudage (19) est disposée à l'extérieur de l'espace de soudage (20) dans un premier interstice (14) entre l'enclume (2) et la première butée latérale (4) ; et/ou
dans lequel une seconde section de bord (18) de l'élément de contact (9) adjacente à la section de soudage (19) est disposée à l'extérieur de l'espace de soudage (20) dans un second interstice (17) entre l'enclume (2) et la seconde butée latérale (5).

7. Procédé de soudage par ultrasons selon la revendication 6, dans lequel la première section de bord (15) est fixée entre l'enclume (2) et la première butée latérale (4) en déplaçant l'enclume (2) et la première butée latérale (4) l'une par rapport à l'autre dans des directions opposées le long du premier axe (z) dans l'espace ; et/ou dans lequel la seconde section de bord (18) est fixée entre l'enclume (2) et la seconde butée latérale (5) en déplaçant l'enclume (2) et la seconde butée latérale (5) l'une par rapport à l'autre dans des directions opposées le long du premier axe (z) dans l'espace.

8. Procédé de soudage par ultrasons selon l'une des revendications 5 à 7,
dans lequel, pour former l'espace de soudage (20), la première butée latérale (4) est déplacée le long du second axe (x) dans l'espace jusqu'à ce qu'elle vienne en butée contre un premier côté de l'élément de contact (9) et/ou la second butée latérale (5) est déplacée le long du second axe (x) dans l'espace jusqu'à ce qu'elle vienne en butée contre un second côté de l'élément de contact (9).

9. Procédé de soudage par ultrasons selon l'une des revendications précédentes,
dans lequel la première section de ligne (21) et la deuxième section de ligne (23) sont disposées et soudées de telle sorte que la première ligne (22) soudée à l'élément de contact (9) s'étend à partir de l'élément de contact (9) dans une autre direction que la deuxième ligne (24) soudée à l'élément de contact (9).

10. Procédé de soudage par ultrasons selon l'une des revendications précédentes, comprenant en outre de :
disposer l'élément de contact (9) soudé à la première section de ligne (21) et à la deuxième section de ligne (23) et une troisième section de ligne (25) d'au moins une troisième ligne (26), entre l'enclume (2) et la sonotrode (3), de sorte que la troisième section de ligne (25) se situe entre la deuxième section de ligne (23) soudée à la première section de ligne (21) et la sonotrode (3) ;
souder la deuxième section de ligne (23) soudée à la première section de ligne (21) et la troisième section de ligne (25), dans lequel l'enclume (2) et la sonotrode (3) sont déplacées l'une par rapport à l'autre dans les directions opposées pour presser la deuxième section de ligne (23) soudée à la première section de ligne (21) et
la troisième section de ligne (25) l'une contre l'autre,
et dans lequel la sonotrode (3) est soumise à des vibrations ultrasonores.

11. Pièce de soudage par ultrasons (27), fabriquée par un procédé de soudage par ultrasons selon l'une des revendications précédentes, dans lequel la pièce de soudage par ultrasons (27) comprend :
un élément de contact électriquement conducteur (9) ;
une première ligne (22) ; et
une deuxième ligne (24) dont le matériau électriquement conducteur diffère d'un matériau électriquement conducteur de la première ligne (22) ;
dans laquelle une première section de ligne (21) de la première ligne (22) est soudée sur l'élément de contact (9) au moyen d'un soudage par ultrasons ;
dans laquelle une deuxième section de ligne (23) de la deuxième ligne (24) est soudée sur la première section de ligne (21) au moyen d'un soudage par ultrasons.

12. Pièce de soudage par ultrasons (27) selon la revendication 11,
dans laquelle l'élément de contact (9) est formé au moins en partie du matériau électriquement conducteur de la première ligne (22) ; et/ou
dans laquelle l'élément de contact (9) est formé au moins en partie du matériau électriquement conducteur de la deuxième ligne (24).

13. Pièce de soudage par ultrasons (27) selon la revendication 11 ou 12,
dans laquelle le matériau électriquement conducteur de la première ligne (22) est du cuivre ou un alliage de cuivre ; et/ou
dans laquelle le matériau électriquement conducteur de la deuxième ligne (24) est de l'aluminium ou un alliage d'aluminium.

14. Pièce de soudage par ultrasons (27) selon la revendication 11 ou 12,
dans laquelle le matériau électriquement conducteur de la première ligne (22) est de l'aluminium ou un alliage d'aluminium ; et/ou
dans laquelle le matériau électriquement conducteur de la deuxième ligne (24) est du cuivre ou un alliage de cuivre.

15. Pièce de soudage par ultrasons (27) selon l'une des revendications 11 à 14, comprenant en outre :
au moins une troisième ligne (26), dans laquelle une troisième section de ligne (25) de la troisième ligne (26) est soudée sur la deuxième section de ligne (23) au moyen d'un soudage par ultrasons.
